# EUROPÄISCHE PATENTANMELDUNG

(11) **EP 2 606 785 A1**
(43) Veröffentlichungstag der Anmeldung: **26.06.2013**
(21) Anmeldenummer: 12197821.7
(22) Anmeldetag: 18.12.2012
(51) Int. Cl.: A47J 36/04, A47J 27/00

(54) **Mehrteiliges Kochgefäss**

(30) Priorität: 20.12.2011 CH 20102011
(71) Anmelder: Schnyder, Reto, 4057 Basel (CH)
(72) Erfinder: Schnyder, Reto, 4057 Basel (CH); Heimrich, Michael, 70180 Stuttgart (DE); Bruni, Martin, 4056 Basel (CH); Herrle, Jonathan, 8037 Zürich (CH); Staudecker, Iris, 4057 Basel (CH)
(74) Vertreter: Bohest AG

(57) **Zusammenfassung**

Das mehrteilige Kochgefäss beinhaltet einen Gefässboden (2) und eine Gefässwand (1). Der Gefässboden weist in einem oberen Randbereich eine Auflagefläche (8) auf für einen unteren Kantenbereich der Gefässwand, zum Bilden einer flüssigkeitsdichten, mindestens teilweise lösbaren Verbindung zwischen Gefässboden und Gefässwand.

## Beschreibung

Die vorliegende Erfindung liegt auf dem Gebiet der Kochgefässe und betrifft ein mehrteiliges Kochgefäss, welches insbesondere für den Outdoor- und Campingbereich geeignet ist.

Aus dem Stand der Technik sind Gefässe für den Outdoor- und Campingbereich zur Nahrungs- und Getränkezubereitung, insbesondere Becher, Töpfe und Pfannen bekannt. Diese Gefässe umfassen meist einen nach oben offenen, zylindrischen Behälter aus einem feuerfesten Material, wie zum Beispiel Stahl, Edelstahl, Kupfer oder Aluminium. Zur Einsparung von Gewicht kommen im Outdoorbereich meist Behälter mit geringen Wandstärken zum Einsatz. Durch die feste, starre Form lassen sich derartige Behälter für den Transport jedoch nur schwer, in zum Beispiel Rucksäcken, verstauen und nehmen dort ein unerwünscht grosses Volumen ein.

Es ist somit Aufgabe der Erfindung ein Kochgefäss zu schaffen, welches sich insbesondere für den Outdoor und Campingbereich eignet. Im Speziellen ist es Aufgabe der Erfindung ein mehrteiliges Kochgefäss zu schaffen, welches platzsparend aufbewahrt und transportiert werden kann.

Die Erfindung betrifft ein mehrteiliges Kochgefäss, welches einen Gefässboden und eine flexible Gefässwand aufweist. Der Gefässboden weist in einem oberen Randbereich eine Auflagefläche für einen unteren Kantenbereich der Gefässwand auf, zum Bilden einer flüssigkeitsdichten, mindestens teilweise lösbaren Verbindung zwischen Gefässboden und Gefässwand.

Die Unterteilung eines Kochgefässes in mehrere Teile und die zumindest teilweise Lösbarkeit dieser einzelnen Teile voneinander, erlaubt ein Auseinandernehmen und Zusammenlegen des Kochgefässes, wenn dieses nicht gebraucht, also beispielsweise verstaut oder transportiert werden soll. Aufgrund der flexiblen Gefässwand kann derjenige Teil eines Kochgefässes, welcher in der Regel volumenmässig und entsprechend platzmässig den grössten Bereich umfasst, zusammengelegt und platzsparend verstaut werden. Für eine flexible Gefässwand können vorzugsweise auch Materialien verwendet werden, welche leichter sind als Materialien die bei herkömmlichen Metall-, Glas- oder Keramikgefässen verwendet werden. Sind Gefässboden und Gefässwand zudem vollständig voneinander lösbar, können einzelne Teile auch separat verstaut, ersetzt oder ausgewechselt werden. Beispielsweise können unterschiedlich grosse oder unterschiedlich geformte Gefässwände mit demselben Gefässboden und nach Bedarf kombiniert werden.

Mehrteilige Kochgefässe sind aus dem Stand der Technik vor allem in Form von Spezialkochtöpfen, wie Druckkochtöpfe oder spezielle Töpfe beispielsweise zum Kochen von Gemüse oder von Reis, bekannt. Diese mehrteiligen Kochgefässe sind weder platzsparend noch aus leichten Materialien gefertigt und für den Campingbereich ungeeignet.

Platzsparende und vorzugsweise auch leichte Kochgefässe sind vor allem im Camping- und/oder Outdoorbereich wünschenswert bzw. notwendig. Mit der Verwendung einer flexiblen Gefässwand können beispielsweise auch Kochgefässe mit grossem Fassungsvolumen transportiert und mitgenommen werden, welche ansonsten keinen Platz, beispielsweise in einem Rucksack, hätten.

Unter dem Begriff ,in einem oberen Randbereich des Gefässbodens' wird hier ein Bereich des Gefässbodens verstanden, welcher sich vom Rand des Gefässbodens hinab bis ungefähr in die Mitte einer Gefässbodenwand erstreckt. Dabei entspricht eine Gefässbodenwand einer seitlichen Wand des Gefässbodens, welche als Wölbung nach oben hin oder auch als separate, mit dem Gefässboden fest verbundene Seitenwand ausgestaltet sein kann.

Unter dem Begriff ,flexible Gefässwand' wird eine Gefässwand verstanden, welche aus einem Material hergestellt ist, derart dass sich die Gefässwand elastisch deformieren und zusammenlegen lässt. Die Gefässwand kann nach einem Zusammenlegen wieder in ihre ursprüngliche Form gebracht werden. Bevorzugtes Material für eine Gefässwand ist ein geeigneter Kunststoff, wie Silikon, wie es beispielsweise von Backformen aus dem Backbereich bekannt ist. Es können auch geeignete Verbundwerkstoffe verwendet werden.

In einer Ausführungsform des Kochgefässes weist dieses eine Spannvorrichtung auf zum Pressen der Gefässwand an die umlaufende und in eine axiale Richtung des Kochgefässes verlaufende Auflagefläche des Gefässbodens. Die flexible Gefässwand, lässt sich auf einen Gefässboden, welcher mit einer entsprechenden Auflagefläche ausgestattet ist, im wesentlichen aufspannen. Dadurch wird eine Verbindung zwischen Gefässwand und Gefässboden geschaffen. Um eine Flüssigkeitsdichtheit der Verbindung zu garantieren, kann die Gefässwand mit Hilfe der Spannvorrichtung gegen die Auflagefläche des Gefässbodens gepresst werden. Unter Verwendung einer Spannvorrichtung kann zwischen Gefässwand und Auflagefläche auch leichtes Spiel vorhanden sein, beispielsweise durch Fertigungstoleranzen, wie beispielsweise unterschiedlichen Durchmessern, oder unterschiedlichen thermischen Ausdehnungseffekten von Gefässboden und Gefässwand und eine flüssigkeitsdichte Verbindung ist trotzdem gegeben. Eine Gefässwand kann in einer solchen Ausführungsform sehr einfach als oben und unten offener Zylinder geformt sein.

Eine Spannvorrichtung kann auch eine Verbindung von Gefässwand und Gefässboden unterstützen. Aufgrund der Spannkraft wird die Verbindung zusätzlich gestärkt oder weniger belastet, so dass diese auch beispielsweise beim Heben des gefüllten, schweren Kochgefässes an einem oberen Randbereich sich nicht löst. Eine solche Spannvorrichtung ist dann vorzugsweise oberhalb oder unterhalb einer Nut oder eines Vorsprungs einer formschlüssigen Verbindung, wie unten beschrieben angebracht.

In einer weiteren Ausführungsform des Kochgefässes weist die Auflagefläche eine zumindest teilweise umlaufende Nut auf. Der untere Kantenbereich der Gefässwand weist einen zur Nut korrespondierenden zumindest teilweise umlaufenden Vorsprung zum Bilden einer formschlüssigen Verbindung mit der Nut auf.

Mit Nut und Vorsprung lassen sich sehr einfache, aber effektive formschlüssige Verbindungen herstellen. Diese Verbindungen sind vollständig voneinander lösbar. Sind Nut und Vorsprung vollständig umlaufend vorgesehen, so können Gefässboden und Gefässwand vollständig voneinander getrennt werden. Der Gefässboden kann so für sich alleine als Teller oder Pfanne verwendet werden. Ist die Nut in der axial verlaufenden Richtung des Gefässbodens eingebracht - axial betreffend der Längsachse des Kochgefässes -, wirkt die Verbindung in axialer und radialer Richtung. Durch den Formschluss wird ein Verschieben der Gefässwand in axialer Richtung, also nach unten oder oben hin, verhindert, so dass ein Kochgefäss beispielsweise auch im Bereich der Gefässwand gehalten oder gehoben werden kann, ohne dass der Gefässboden abfällt. Ein Lösen des Formschlusses geschieht durch Zugkraft in radialer Richtung.

Die Nut kann auch im unteren Kantenbereich der Gefässwand vorgesehen sein. Die Anlagefläche weist dann einen entsprechenden Vorsprung auf. Der Vorsprung kann in oder an der Anlagefläche angebracht sein. Gemäss einer Ausführungsform des Kochgefässes ist ein oberer Rand des Gefässbodens als ein nach aussen weisender Vorsprung ausgebildet. Im unteren Kantenbereich der Gefässwand ist eine dazu korrespondierende Nut eingebracht, zum Bilden einer formschlüssigen Verbindung mit dem Vorsprung.

Der Rand des Gefässbodens, welcher nach aussen abstehend geformt ist, bildet direkt den Vorsprung. Auf diese Weise kann sehr einfach und kostengünstig ein Gefässboden für das erfindungsgemässe Kochgeschirr hergestellt werden. Der untere Kantenbereich der flexiblen Gefässwand wird dann über den nach aussen gebogenen Rand des Gefässbodens gestülpt. Ist der Rand beispielsweise leicht nach unten gebogen oder beispielsweise gebördelt, kann eine Verbindung zusätzlich verstärkt werden.

Je nach Ausformung der Nut und des Vorsprungs lassen sich Verbindungen, insbesondere formschlüssige Verbindungen, unterschiedlicher Stärke herstellen. Zum Verstärken der Verbindung kann eine Nut mit einem Hinterschnitt versehen werden und ein Vorsprung mit einem zum Hinterschnitt der Nut passenden Eingriff, beispielsweise wie in einer Schwalbenschwanzverbindung. Je nach Ausprägung des Hinterschnitts und Eingriffs, z.B. ein- oder zweiseitig, abgeschrägt oder rechtwinklig, Länge, Anordnung des Hinterschnitts etc., kann eine benötigte Grösse der Zugkraft zum Lösen der Verbindung eingestellt werden.

In einer Ausführungsform des Kochgefässes ist die Verbindung, vorzugsweise formschlüssige Verbindung, in einem ersten Bereich mit einer ersten Grösse einer Zugkraft lösbar. In einem zweiten Bereich ist die Verbindung, vorzugsweise formschlüssige Verbindung, mit einer zweiten Grösse einer Zugkraft lösbar, wobei die Grösse der ersten Zugkraft und die Grösse der zweiten Zugkraft unterschiedlich sind. Vorzugsweise wird in einem Bereich, d.h. über einen Teil des Umfangs des Kochgefässes eine Verbindung verwendet, welche mit einer eher leichten Zugkraft lösbar ist. Dies erlaubt ein leichtes voneinander Lösen von Gefässboden und Gefässwand in diesem ersten Bereich und ein entsprechendes Zusammenlegen des Kochgefässes. In einem zweiten Bereich, d.h. über einen anderen Teil des Umfangs des Kochgefässes wird eine Verbindung verwendet, welche mit einer erhöhten Zugkraft lösbar ist. Das Kochgefäss wird somit nicht vollständig zerlegt, sondern Geschirrboden und Geschirrwand bleiben im Bereich der starken Verbindung miteinander verbunden. Die starke Verbindung ist jedoch vorzugsweise immer noch lösbar, beispielsweise zum Ersetzen eines Kochgefässteils. Es ist auch möglich anstelle einer Verbindung mit erhöhter Zugkraft eine permanente Verbindung zu wählen. Dadurch ist weiterhin eine Zusammenlegbarkeit des Kochgeschirrs gegeben, - aufgrund des Bereichs mit dem leicht lösbaren Formschluss - es müssen jedoch beim Zusammenbau des Kochgeschirrs keine Einzelteile wieder vollständig zusammengesetzt werden.

Es ist auch möglich eine flüssigkeitsdichte Verbindung nicht in einer axial verlaufenden Anlagefläche, sondern in einer beispielsweise radial verlaufenden Anlagefläche zu realisieren. Wird dafür eine formschlüssige Verbindung gewählt, ist diese dann jedoch vorzugsweise so stark, dass eine Gewichtskraft des Kochgeschirrs, auch in gefüllter Form, die Verbindung nicht ungewollt lösen kann.

In einer Ausführungsform des Kochgefässes weist dieses ein Greifelement zum Heben des Kochgefässes und/oder zum Lösen der Verbindung zwischen Gefässboden und Gefässwand auf. Ein Greifelement erleichtert ein Heben des Kochgefässes und erlaubt je nach Ausgestaltung oder Ort der Befestigung auch oder ausschliesslich ein Lösen der Verbindung. Da insbesondere bei den beschriebenen lösbaren Verbindungen eine Zugkraft in radial zum Kochgeschirr verlaufender Richtung aufgebracht werden muss, wird dies durch das Vorhandensein eines Greifelements, welches vorzugsweise integral mit einer Gefässwand hergestellt ist, ermöglicht bzw. erleichtert. Es können auch mehrere Greifelemente vorgesehen sein, wobei einzelne oder alle davon ausschliesslich zum Heben oder Lösen vorgesehen sind.

In einer bevorzugten Ausführungsform des Kochgefässes sind Gefässboden und Gefässwand aus einem feuerfesten Material hergestellt. Dies erlaubt eine Verwendung des Kochgefässes auch auf offenem Feuer, ohne dass Teile des Geschirrs durch Flammen beschädigt werden.

Gemäss einer weiteren Ausführungsform des Kochgefässes, weist das Kochgefäss ein Schutzelement auf. Dies ist derart am Kochgefäss angebracht, dass zumindest ein unterer Bereich der Gefässwand vor direktem Kontakt mit offenen Flammen und grosser Hitze einer Kochstelle geschützt ist, und so Brandspuren und Materialbeschädigungen verhindert werden. Mit einem Schutzelement kann eine Gefässwand lediglich aus einem hitzbeständigen, nicht notwendigerweise aus einem feuerfesten Material, hergestellt sein. Das Schutzelement schützt die Gefässwand vor direkter Flamme. Damit kann eine Gefässwand beispielsweise aus günstigerem, dünnerem, flexibleren, leichterem Material oder Kombinationen davon und somit kostengünstig oder gewichtsparend oder beides, hergestellt werden. Ein solches Schutzelement ist vorzugsweise am Gefässboden oder an der Gefässwand angebracht, vorzugsweise als separates abnehmbares Element oder integral daran angeformt oder daran befestigt. In einer Variante der Ausführungsform des Kochgefässes ist das Schutzelement derart geformt und am Kochgefäss nach unten abstehend angeordnet, dass es auch einen Windschutz für eine Kochstelle bildet. Dies findet bevorzugt Anwendung bei der Verwendung des Kochgefässes auf einer offenen Feuerstelle oder einer Heizquelle mit offener Flamme. Durch die Kombination von Flammenschutz und Windschutz können beide Vorteile in einem einzelnen Element zusammengefasst werden. Vorzugsweise liegt das Schutzelement zumindest an einem unteren Bereich der Gefässwand an und deckt vorzugsweise zumindest den untersten Kantenbereich des Gefässwand.

Da vor allem im Campingbereich ein Kochgeschirr möglichst platzsparend sein sollte, weist das erfindungsgemässe Kochgefäss in einer Ausführungsform einen Deckel auf, welcher mit dem Gefässboden formschlüssig kombinierbar ist.

In einer weiteren Ausführungsform weist ein Deckel an seiner Oberseite abstehende Zapfen auf. Mit Hilfe dieser Zapfen kann ein Deckel am Kochgefäss, entweder an der Gefässwand oder am Gefässboden, befestigt werden. In einer Ausführungsform weist die Gefässwand Bänder, vorzugsweise Schlaufen auf. Diese Bänder sind an den Zapfen des Deckels, beispielweise durch Einhaken, Umschlaufen, Wickeln etc. befestigbar und halten den Deckel auf der Gefässwand. Dies bietet den Vorteil, dass ein Deckel auch beim Kippen des Kochgefässes, beispielsweise bei einem Abschütten von Flüssigkeit, nicht abfällt. Ein Deckel kann entsprechend mit Abschütt- oder Lüftungsöffnungen versehen sein.

Die Erfindung betrifft auch eine flexible Gefässwand zur Verwendung in einem Kochgefäss wie oben beschrieben. Die flexible Gefässwand weist in einem unteren Kantenbereich eine zumindest teilweise umlaufende Nut oder einen zumindest teilweise umlaufenden Vorsprung auf, zum Bilden einer flüssigkeitsdichten Verbindung mit korrespondierenden Verbindungsmitteln, beispielsweise Nuten und Vorsprünge, in einem oberen Randbereich eines Gefässbodens.

Die Vorteile der Gefässwand wurden im Rahmen des Kochgefässes weiter oben bereits beschrieben und werden hier deshalb nicht wiederholt.

Eine Gefässwand ist vorzugsweise rund, kann aber auch rechteckig, insbesondere viereckig, vieleckig, oval sein oder andere Querschnittformen aufweisen. Insbesondere kann eine Gefässwand über seine Höhe verschiedene Durchmesser aufweisen. Beispielsweise kann sie einen sich nach oben hin verbreiternden Durchmesser aufweisen. Eine Verbreiterung nach oben hin ermöglicht einen besseren Zugang zum Kochgefäss und ist beispielsweise auch für kalte Speisen, wie Salate, gut geeignet. Auch ein Gefässboden weist vorzugsweise einen runden Durchmesser auf, kann jedoch auch andere Formen aufweisen. Eine Höhe einer Gefässwand wird vorzugsweise so gewählt, dass die Gefässwand in zusammengelegter Form vollständig im Gefässboden verstaut werden kann, i.e. dass eine Höhe einer Gefässwand maximal in etwa dem Innendurchmesser eines Gefässbodens entspricht.

Das erfindungsgemässe Kochgeschirr wird im Folgenden anhand von beispielhaften Figuren näher beschrieben. Dabei zeigt
- Fig. 1: eine perspektivische Ansicht eines Kochgefässes;
- Fig. 2: einen zentralen Längsschnitt eines Kochgefässes mit Spannvorrichtung;
- Fig. 3,4: eine Aufsicht und einen zentralen Längsschnitt eines Kochgefässes mit formschlüssiger Verbindung;
- Fig. 5,6: eine Aufsicht und einen zentralen Längsschnitt eines Kochgefässes mit teilweise verstärkter formschlüssiger Verbindung;
- Fig. 7: einen Ausschnitt eines zentralen Längsschnitts einer Kombination von Deckel und Gefässboden;
- Fig. 8-10: einen Deckel und Details davon, mit Rippenstruktur an der Unterseite des Deckelrandes;
- Fig. 11, 12: zentrale Längsschnitte von Kochgefässen mit einem Flammenschutz und einer Kombination Flammenschutz und Windschutz;
- Fig. 13,14: einen zentralen Längsschnitt und eine Ansicht eines Kochgefässes mit an der Gefässwand fixiertem Flammenschutz;
- Fig. 15,16: eine Aufsicht und eine Seitenansicht eines Kochgefässes mit einem in die Gefässwand integrierten Griff, inklusive Schnittansicht des Griffes;
- Fig. 17-20: einen Ausschnitt eines Längsschnittes von Gefässboden und Gefässwand mit weiterer Ausführungsform einer Verbindung (Fig.17); eine perspektivische Ansicht und eine Aufsicht eines Kochgefässes mit derartiger Verbindung (Fig. 18,19); sowie eine perspektivische Ansicht des Kochgefässes in verstaubarem Zustand.

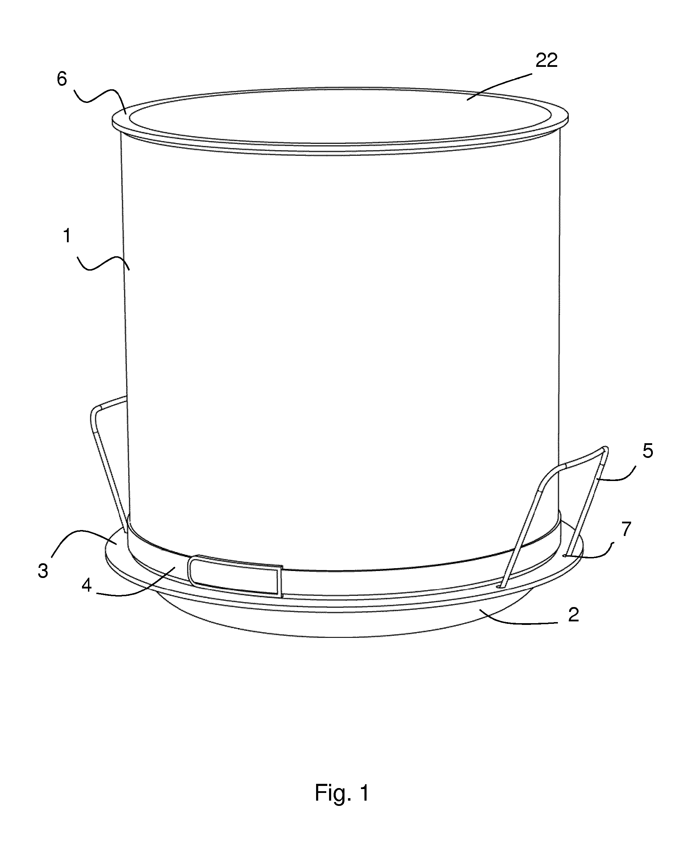

**Fig. 1** zeigt ein erfindungsgemässes Kochgeschirr mit Gefässwand 1, Gefässboden 2 und Deckel 22. Die Gefässwand 1 liegt in ihrem unteren Kantenbereich an einer Auflagefläche 8 des Gefässbodens an (nicht sichtbar) und bildet mit dieser vorzugsweise eine flüssigkeitsdichte Verbindung. In diesem unteren Kantenbereich ist ausserhalb der Gefässwand eine Spannvorrichtung 4 in der Form eines Spannrings angebracht. Die Gefässwand 1 ist mit der Spannvorrichtung wasserdicht und lösbar mit dem Gefässboden 2 verbunden. Der Vorteil dieser Art der Verbindung besteht darin, dass sich Gefässwand und Gefässboden mittels der Spannvorrichtung einfach und sicher kombinieren bzw. auseinander nehmen lassen und eine flüssigkeitsdichte Verbindung zwischen Gefässwand und Gefässboden garantiert ist.

Der Gefässboden 2 weist einen radial nach aussen stehenden Ring als Flammenschutz 3 für die Gefässwand 1 auf. Der Ring kann integral mit dem Gefässboden geformt, über diesen gestülpt und daran festgeklemmt oder anderweitig am Gefässboden befestigt werden. Es können dazu entsprechende Anschläge an der Aussenseite des Gefässbodens angebracht sein. Der Innendurchmesser des Flammenschutzrings entspricht dem Aussendurchmesser des Gefässbodens. Der Aussendurchmesser ist so bemessen, dass die Gefässwand 1 vor eventuell auftretenden Flammen durch eine unter dem Kochgeschirr befindlicher Hitzequelle mit offenen Flammen geschützt ist. Soll der Flammenschutz 3 lediglich als Hebemöglichkeit für das Kochgefäss bzw. den Gefässboden 2 dienen, so kann der Ring entsprechend kleiner gestaltet sein.

Im Flammenschutz 3 sind Strukturen 7 eingebracht, beispielsweise Löcher, zum Befestigen von zwei gegenüberliegenden Haltegriffen 5.

Die Gefässwand 1 hat eine zylindrische, nach oben und unten offene Form und ist aus einem flexiblen, elastischen und hitzebeständigen Material, beispielsweise aus Silikon. Wird kein Flammenschutz für das Kochgefäss verwendet, jedoch bevorzugt auf offener Flamme gekocht, kann das für eine Gefässwand verwendete Material auch aus einem feuerfesten Material sein. Der Vorteil des Flammenschutzes 3 besteht darin, dass die Gefässwand 1 vor direktem Kontakt mit offenen Flammen und grosser Hitze geschützt ist und so Brandspuren und Materialbeschädigungen verhindert werden. Die Gefässwand muss dadurch nicht feuerfest sein und kann z.B. aus leichteren und flexibleren Materialien als bei herkömmlichen Kochgefässen oder bei Kochgefässen ohne Flammenschutz bestehen.

Der Gefässboden 2 ist im wesentlichen eine nach oben offene Schale und besteht vorzugsweise aus einem formstabilen, feuerfesten Material, wie zum Beispiel Metall. Der Querschnitt des Gefässbodens 2 ist rund, kann aber auch andere Formen, wie beispielsweise rechteckig, oval, vieleckig etc. sein. Aufgrund seiner Flexibilität, passt sich eine Gefässwand 1 der Form des Gefässbodens an. Es ist jedoch auch möglich der Gefässwand bereits die entsprechende Querschnittsform des Gefässbodens oder einer entsprechenden Anlagefläche 8 zu geben.

Der Deckel 22 hat im wesentlichen die Form einer Schale mit leichter Vertiefung im Innenbereich und mit einem Deckelrand 6 zum Aufsetzen und Abnehmen des Deckels auf und vom Kochgefäss. Der Deckel 22 ist in dieser Form auch als Teller verwendbar.

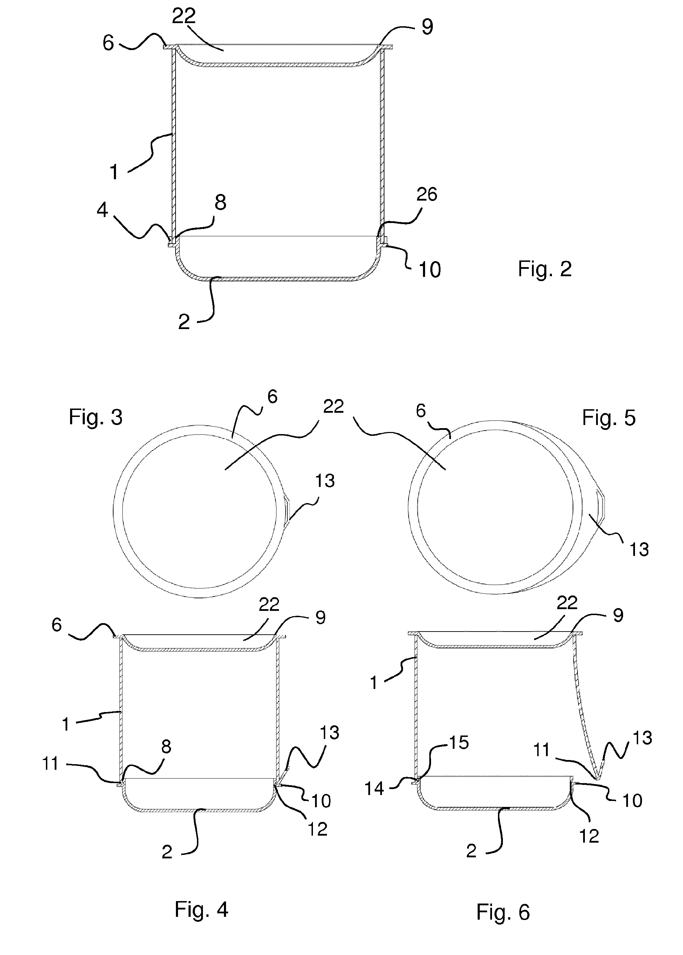

In **Fig. 2** ist eine konstruktiv einfache Ausführungsform des Kochgefässes mit Spannring 4 gezeigt. Im oberen Randbereich des Gefässbodens 2 weist dieser eine Vorrichtung zur Anbringung der Gefässwand 1 auf. Mit einem Abstand vom oberen Rand 26 des Gefässbodens 2 befindet sich ein umlaufender, radial nach aussen stehender Absatz 10. Der Absatz 10 bildet eine Anschlagsfläche für die Unterkante der Gefässwand. Der Bereich zwischen dem oberen Rand des Gefässbodens und dem Absatz bildet eine Auflagefläche 8 für die Gefässwand 1. Dieser Bereich bzw. die Auflagefläche 8 ist dabei so beschaffen, dass sich die Gefässwand 1 mittels der Spannvorrichtung 4 so dagegen pressen lässt, das eine lösbare, flüssigkeitsdichte Verbindung von Gefässboden und Gefässwand entsteht. Der Spannring kann jedoch auch weggelassen werden. Die Innenfläche der Gefässwand ist vorzugsweise glatt, zumindest in ihrem unteren Kantenbereich, welcher zur Bildung der Verbindung mit dem Gefässboden dient. Auch die Auflagefläche 8 weist vorzugsweise eine glatte Oberfläche auf. Der Innendurchmesser der Gefässwand 1 ist dabei so bemessen, dass die Gefässwand eng am Gefässboden anliegt und durch die Spannung im Material eine vorzugsweise flüssigkeitsdichte, lösbare Verbindung entsteht, wobei durch das Anbringen des Spannrings 4 eine Flüssigkeitsdichtheit garantiert wird.

Der Deckel 22 weist wiederum einen über die Kontur der Gefässwand hinausstehenden Rand 6 auf, der ein besseres Greifen zum Abnehmen des Deckels ermöglicht. Im inneren Bereich des Deckelrandes 6 befindet sich auf der Oberseite des Deckels ein Wulst 9 in der Form einer umlaufenden Rippe. Der Wulst 9 entspricht im Durchmesser dem Innendurchmesser der Gefässwand 1 und verhindert so ein Verrutschen des Deckels wenn dieser auf der Gefässwand aufgebracht ist. In der gezeigten Variante liegt der Deckel mit seiner bauchigen Seite nach unten auf dem Kochgefäss. Damit wird ebenfalls ein Verrutschen des Deckels verhindert.

In **Fig. 3 und Fig. 4** ist ein Kochgefäss ohne Spannring, jedoch mit anderer Verbindung von Gefässboden und Gefässwand gezeigt. In den Gefässboden 2 bzw. in die Auflagefläche 8 ist eine umlaufende Nut 12 eingearbeitet, beispielsweise gepresst oder geformt. Die Gefässwand 1 weist auf ihrer Innenseite im unteren Kantenbereich einen umlaufenden Vorsprung 11 in der Form einer Rippe auf, der der Nut des Gefässbodens entspricht. Das Ineinandergreifen von Nut 12 und Vorsprung 11 bilden einen Formschluss und Verhindern ein Abrutschen der Gefässwand 1 vom Gefässboden 2 in axialer Richtung. Der Innendurchmesser der Gefässwand 1 ist dabei so bemessen, dass die Gefässwand eng an der Auflagefläche 8 anliegt. Durch die Spannung im Material, welche durch das Verwenden eines flexiblen, elastischen Materials für die Gefässwand erreicht wird, entsteht mit Nut und Vorsprung eine flüssigkeitsdichte, lösbare Verbindung.

Um die Gefässwand 1 vom Gefässboden 2 zu lösen, ist an einer Stelle der Gefässwand, vorzugsweise in einem äusseren unteren Bereich auf einer gegenüberliegenden Seite der Verbindung, eine Lösevorrichtung 13, in der Form eines Griffes oder eines abstehenden Materialstückes vorgesehen. Die Lösevorrichtung 13 ist von der Gefässwand abstehend und vorzugsweise, wie der Vorsprung, einstückig mit der Gefässwand gefertigt. Die Lösevorrichtung 13 erlaubt ein sicheres Greifen der Gefässwand 1, um die nötige Zugkraft zum Lösen der Verbindung zwischen Gefässwand und Gefässboden, welche radial aufgebracht werden muss, aufzubringen.

Ein Vorteil dieser Art der Verbindung mit Nut und Vorsprung besteht darin, dass sich Gefässwand und Gefässboden ohne zusätzliche Hilfsmittel, insbesondere ohne zusätzlich Spannmittel, flüssigkeitsdicht kombinieren und auseinander nehmen lassen.

In **Fig. 5 und Fig. 6** ist eine Variante des Kochgefässes gezeigt. Der Unterschied zu der in Fig. 4 gezeigten Ausführungsform besteht in der Art der Verbindung. Für die Verbindung von Gefässboden 2 und Seitenwand 1 ist an bestimmten Stellen im Gefässboden, d.h. über einen Bereich des Umfangs des Kochgefässes, ein negatives T-Profil 15 eingearbeitet. In dieses lässt sich das entsprechende positive T-Profil 14 der Gefässwand drücken. Bis auf die Stellen mit dem T-Profil weist der Gefässboden eine einfache Nut 12 und die Gefässwand einen entsprechenden einfachen Vorsprung 11 gemäss der Ausführungsform nach Fig. 4 auf. In den Bereichen des T-Profils 14,15 bilden Gefässwand und Gefässboden eine nur mit erhöhtem Kraftaufwand lösbare Verbindung. In den anderen Bereichen mit einfacher Nut und Vorsprung 11,12 lassen sich Seitenwand und Gefässboden einfacher voneinander lösen, bilden im kombinierten Zustand aber jederzeit eine flüssigkeitsdichte, lösbare Verbindung. Der Durchmesser der Seitenwand ist dabei wiederum so bemessen, dass die Gefässwand 1 eng an dem Gefässboden 2 anliegt. Um die Gefässwand vom Gefässboden per Hand zu lösen, ist an einer Stelle der Gefässwand, vorzugsweise im Bereich der schwächeren Verbindung, wiederum eine Lösevorrichtung 13 vorgesehen. Diese erlaubt ein besseres Greifen der Gefässwand, um ein partielles Lösen der Verbindung von Gefässwand und Gefässboden zu erleichtern. In Fig. 6 ist die Gefässwand im Bereich der schwächeren Nut und Vorsprung-Verbindung in geöffnetem Zustand gezeigt. Die Lösevorrichtung 13 erlaubt auch ein Halten des Kochgefässes an dieser Vorrichtung.

Die stärkere und schwächere formschlüssige Verbindung ist vorzugsweise etwa in einem Verhältnis von 1:3 Teilen um den Umfang des Gefässbodens bzw. der Anschlagsfläche verteilt. Dies heisst, die stärkere Verbindung, welche eine erhöhte Zugkraft zum Lösen derselben benötigt, erstreckt sich in etwa über einen Viertel des Umfangs des Gefässbodens und die schwächere Verbindung über etwa drei Viertel. Die feste Verbindung erstreckt sich typischerweise über maximal die Hälfte des Umfangs des Gefässbodens.

Ein Vorteil von unterschiedlich starken Verbindungen zwischen Gefässboden und Gefässwand ist, dass sich Gefässboden und Gefässwand weiterhin trennen und gegebenenfalls auch auswechseln lassen. Für einen Transport und eine Aufbewahrung müssen Gefässboden und Gefässwand aber nicht vollständig voneinander getrennt werden, sondern können ineinander- bzw. zusammengelegt werden.

Eine stärkere formschlüssige Verbindung kann, falls eine Trennung der einzelnen Teile des Kochgeschirrs nicht gewünscht ist, auch permanenter Natur sein. Eine permanente Verbindung kann beispielsweise geklebt, verschweisst, gepresst, genietet oder anderweitig unlösbar ausgestaltet sein, derart, dass eine flüssigkeitsdichte Verbindung gebildet wird. Ein mit einer teilweise nicht lösbaren Verbindung ausgestaltetes Kochgeschirr weist weiterhin die Vorteile einer flexiblen, zusammenlegbaren Gefässwand und damit eines zusammenlegbaren Kochgeschirrs auf. Zudem sind bei Gebrauch die Einzelteile zumindest teilweise bereits miteinander verbunden, so dass ein Aufbau des Kochgefässes schneller ausgeführt werden kann.

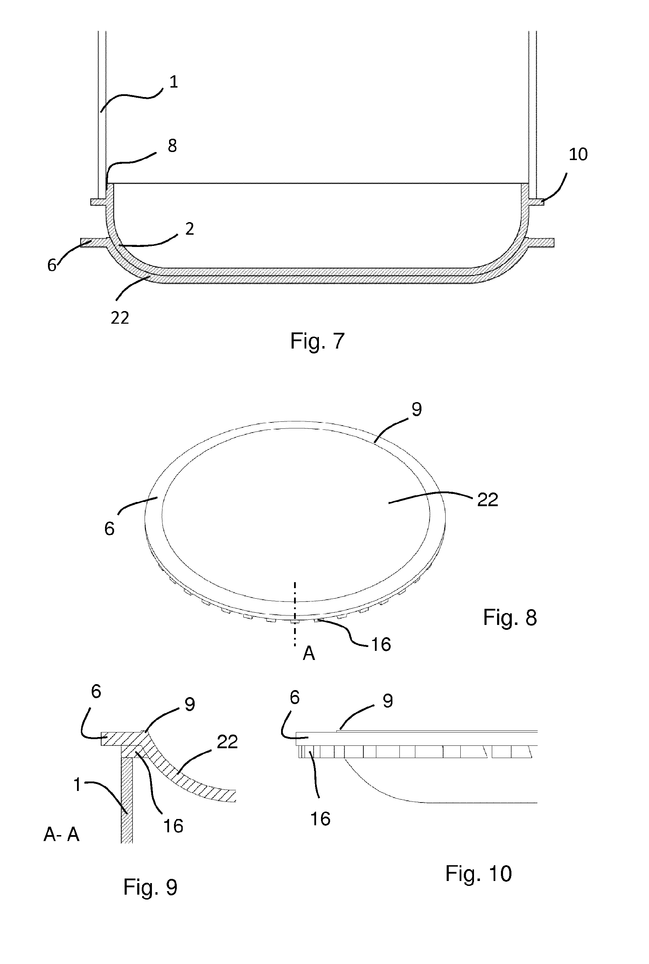

**Fig. 7** zeigt einen Ausschnitt eines unteren Bereichs eines Kochgeschirrs mit einfacher Verbindung von Gefässboden 2 und Gefässwand 1 gemäss Fig. 2 (aneinander gelegte glatte Flächenabschnitte), aber ohne dortige Spannvorrichtung. Die Innenkontur des Deckels 22 entspricht der äusseren Form des Gefässbodens 2. Dadurch lassen sich Deckel 22 und Gefässboden 2 platzsparend ineinander stellen und kombinieren. Der Deckel wird vorzugsweise aus einem hitzebeständigen, formstabilen Material hergestellt. Der Deckel 22 kann aber auch aus einem isolierenden Material gefertigt sein, um ein Anfassen des Deckels zu erleichtern. Weitere ineinander legbare, möglichst passgenaue Formen von Gefässboden und Deckel sind möglich. Beispielsweise kann eine Aussenkontur des Deckels mit der Innenkontur des Gefässbodens korrespondieren.

In **Fig. 8,9 und 10** ist eine Variante eines Deckels 22 gezeigt. Die Unterseite des Deckelrandes 6 weist eine Struktur auf, die ein planes, geschlossenes Aufliegen des Deckels 22 auf der Gefässwand 1 verhindert. Durch die als eine Mehrzahl über den Umfang des Deckelrandes 6 gleichmässig verteilten Streben 16 entstehen Öffnungen zum Inneren des Kochgefässes. Durch diese Öffnungen kann beispielsweise Wasserdampf aus dem Kochgefäss entweichen. Werden die Öffnungen gross genug gewählt, d.h. die entsprechenden Abstände und Höhen der einzelnen Streben 16 entsprechend gewählt, muss auch der Deckel 22 für das Abgiessen von beispielsweise Wasser, zum Beispiel beim Kochen von Pasta, nicht abgenommen werden. Dadurch wird die Handhabung des Kochgefässes vereinfacht und die Sicherheit im Zusammenhang mit heissem Wasser erhöht.

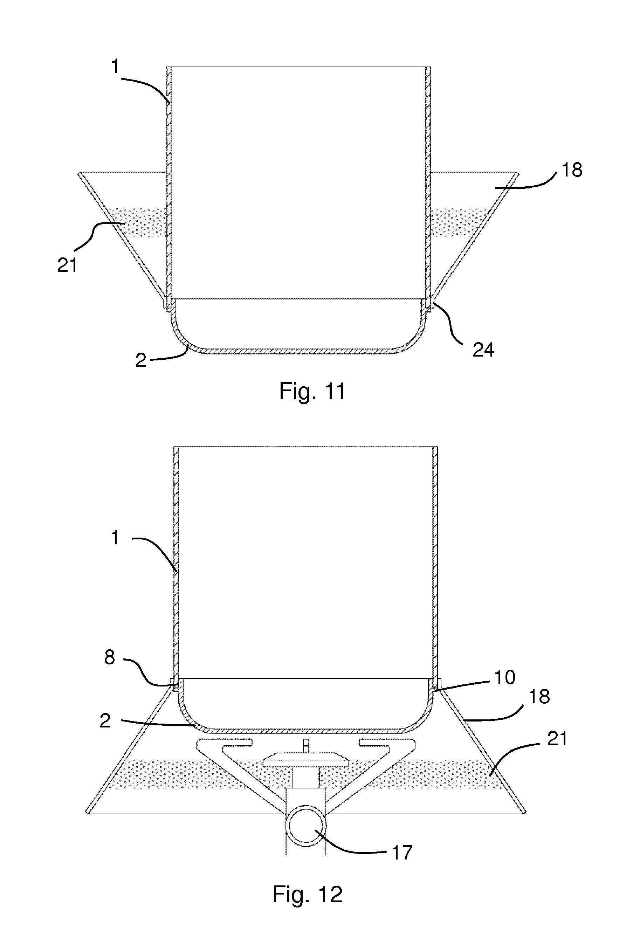

In **Fig. 11** ist ein Kochgeschirr mit Flammenschutz 18 dargestellt. Der Flammenschutz 18 weist einen parallel zur Gefässwand verlaufenden ringförmigen Bereich 24 auf, von welchem sich der Durchmesser des Flammenschutzes trichterförmig vergrössert. Der Flammenschutz 18 kann über die Gefässwand 1 geschoben werden, wobei der ringförmige Bereich an der Gefässwand aufliegt und gegebenenfalls gleichzeitig als Spannmittel wirken kann. Der gleiche Flammenschutz 18 kann, wie in **Fig. 12** gezeigt, mit der trichterförmigen Öffnung nach unten am Kochgefäss angebracht werden. Der ringförmige Bereich 24 des Flammenschutzes kommt dabei in der gleichen Position an der Gefässwand zu liegen wie in Figur 9. Mit dem Trichter nach unten, bildet dieser gleichzeitig zu einem Flammenschutz auch einen Windschutz für eine Hitzequelle, beispielsweise eines Campingkochers 17. Im Trichter sind Luftlöcher 21 vorgesehen, die eine Sauerstoffzufuhr für den Campingkocher gewährleisten. Der Aussendurchmesser und die Höhe des Flammenschutzes 18 sind so bemessen, dass die Gefässwand 1 vor eventuell auftretenden Flammen durch die Hitzequelle beim Kochen geschützt ist.

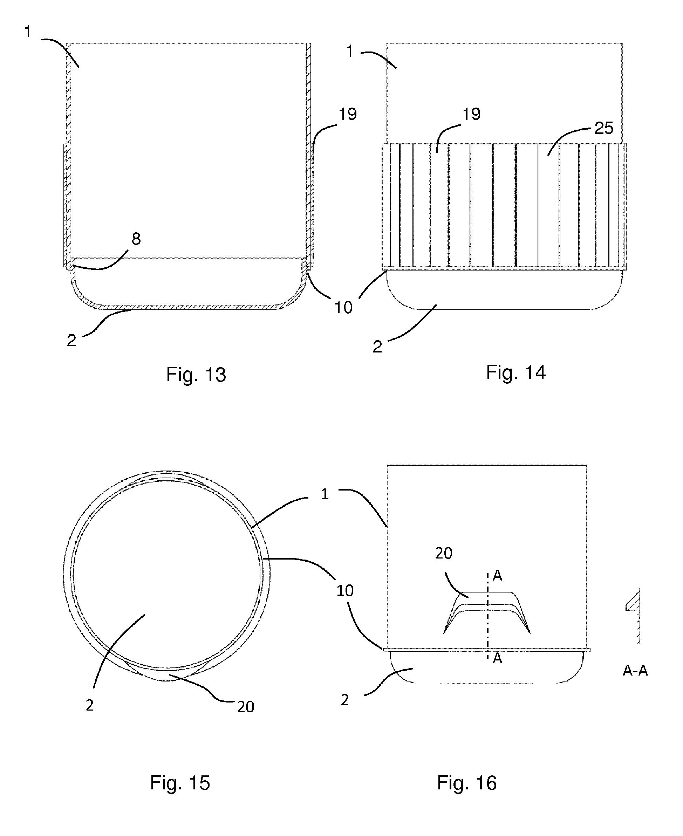

In **Fig. 13 und Fig. 14** ist ein Flammenschutz 19 gezeigt, welcher vorzugsweise direkt mit der Gefässwand 1 verbunden und rund um diese angeordnet ist. Der Flammenschutz 19 besteht aus einzelnen Segmenten aus einem hitzebeständigen, vorzugsweise feuerfesten Material, beispielsweise Aluminium. Aufgrund der Unterteilung des Flammenschutzes in einzelne Segmente ist dessen Flexibilität gewährleistet. Die Gefässwand 1 lässt sich dadurch weiterhin zusammenfalten und ist dauerhaft mit einem Flammenschutz 19 ausgestattet. Die Segmente können auch in sich geformt, beispielsweise ein Volumen einschliessend, oder gekrümmt sein, um eine zusätzliche Wärme isolierende Wirkung aufzuweisen. Der Flammenschutz 19 erstreckt sich von der unteren Kante der Gefässwand 1 hinauf bis etwas über die Mitte der Gefässwand. Der Flammenschutz 19 kann sich jedoch auch weiter hinauf bis beispielsweise an die oberer Kante der Gefässwand erstrecken oder auch nur über einen unteren Bereich der Gefässwand, welcher untere Bereich typischerweise 20-50% der Gefässwand 1 umfasst.

**Fig. 15 und Fig. 16** zeigen an der Außenseite der Gefässwand 1 einen Griff 20 zum Greifen des Kochgefässes. Der Griff ist vorzugsweise aus demselben Material, beispielsweise Silikon, wie die Gefässwand 1 und einstückig mit dieser gefertigt. Der Griff 20 erleichtert das Heben des Kochgefässes beispielsweise zum Abschütten von Wasser, welches ansonsten auch mittels Absatz 10 vorgenommen werden kann. Der Griff 20 ist sehr einfach gestaltet, wie in der Schnittansicht A-A zu sehen, und wird im wesentlichen durch einen von der Gefässwand abstehenden Vorsprung gebildet. Der Griff 20 ist entfernt von einer Heizquelle angeordnet und ist vorzugsweise aus einem isolierenden Material hergestellt. Damit wird dieser weniger heiss wie ein aus Metall hergestellter Gefässboden und lässt sich damit besser anfassen.

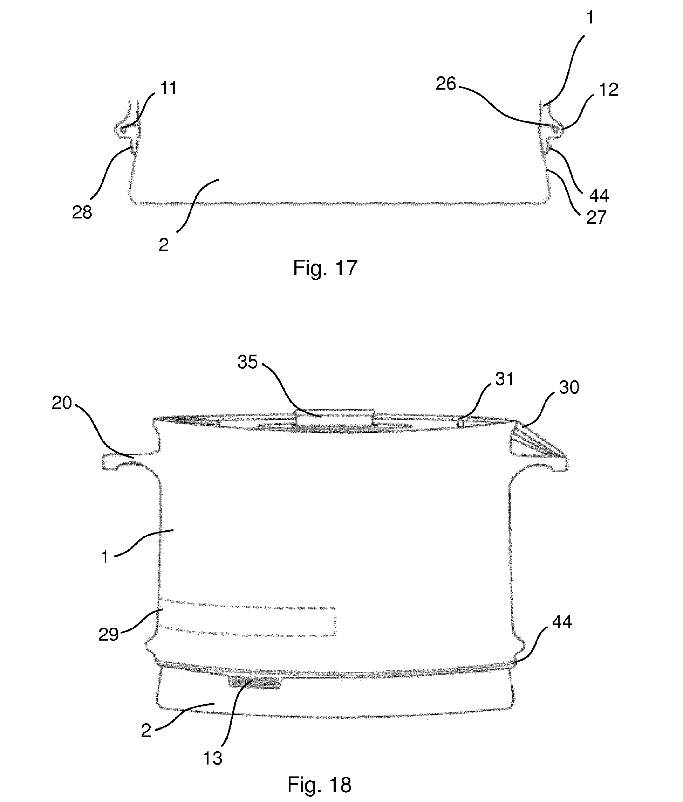

**Fig. 17** zeigt einen Ausschnitt einer Schnittansicht eines unteren Bereichs eines Kochgeschirrs mit einer weiteren Ausführungsform einer Verbindung von Gefässboden 2 und Gefässwand 1. In der Verbindung bildet der obere Rand 26 oder Randbereich des Gefässbodens 2 einen im wesentlichen radial nach aussen stehenden Vorsprung 11. Dieser abstehende Vorsprung 11, welcher hier zusätzlich gebördelt ist, bildet die eine Hälfte der Verbindung zwischen Gefässboden 2 und Gefässwand 1. Die Nut 12 ist eine im unteren Bereich der Gefässwand eingebrachte Vertiefung, welche zum Vorsprung 11 korrespondiert. Vorsprung 11 und Nut 12 bilden eine lösbare aber feste und flüssigkeitsdichte Verbindung. Um ein ungewolltes Lösen der Verbindung zu Verhindern, ist in einer Aussenseite der Gefässwand unterhalb der Nut 12 eine ringförmig verlaufende Rille 28 eingebracht. In diese Rille ist ein Spannring in der Form eines O-Rings 44 eingebracht (in Fig. 17 nur rechts eingezeichnet). Der O-Ring kann auch eine Flüssigkeitsdichtheit der Verbindung unterstützen. Der Gefässboden 2 weist einen leicht konisch nach innen gerichteten Rand 27 auf. Damit wird eine Verbindung oder eine Gefässwand von einer Hitzequelle abgeschattet. Aufgrund der Ausgestaltung der Verbindung und des flexiblen Materials der Gefässwand, kann beispielweise ein Flammschutz wie in Fig. 11 und Fig. 12 gezeigt, unter den unteren Rand der Verbindung geschoben und mit der Gefässwand am Kochgefäss befestigt werden. Dazu und zum Lösen der Verbindung können eine oder mehrere Lösevorrichtungen 13, wie in **Fig. 18** zu sehen, über den Umfang des unteren Randes der Gefässwand verteilt angeordnet sein.

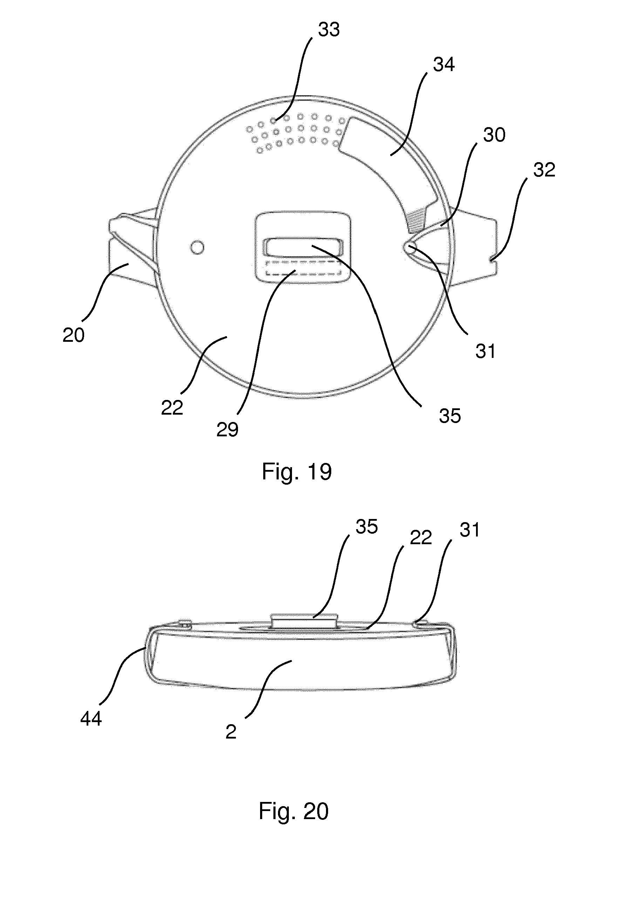

Die Gefässwand 1 weist in einem oberen Bereich, beabstandet zum oberen Rand der Gefässwand 1, zwei gegenüberliegende Griffe 20 auf. Die Griffe 20 können an die Gefässwand angeformt oder vorzugsweise direkt und einstückig mit dieser hergestellt werden. Gefässwand 1 und Deckel 22 weisen Befestigungsmittel 30, 31 auf. Diese sind in der Gefässwand 1 als zwei, vorzugsweise elastische, Schlaufen 30 ausgebildet. Der Deckel 22 weist an seiner Oberseite entsprechend zwei pilzförmige Vorsprünge 31 auf. Wird der Deckel 22 entsprechend ausgerichtet auf dem Kochgefäss aufgebracht, können die Schlaufen 30 über die Vorsprünge 31 gestülpt und der Deckel 22 damit auf dem Kochgefäss befestigt werden. Wird eine Schlaufe 30 nicht gebraucht, ist sie in eine entsprechende Kerbe 32 in den Griffen 20 einlegbar, wie in **Fig. 19** recht zu sehen. In der Aufsicht in Fig. 19 sind zudem in einem radialen Randbereich des Deckels 22 eine Mehrzahl von Öffnungen 33 und eine Abdeckung 34 für diese Öffnungen 33 im Deckel 22 zu sehen. In offenem Zustand kann Flüssigkeit aus dem Kochgefäss durch die Öffnungen 33 abgeschüttet werden. Aufgrund der befestigten Schlaufen 31 löst sich der Deckel 22 auch in gekippter Position des Kochgefässes nicht vom Gefäss. Die Abdeckung 34 weist vorzugsweise an ihrer Unterseite Stifte (nicht gezeigt) auf, welche zu den Öffnungen 33 korrespondieren. Damit kann die Abdeckung in die Öffnungen 33 eingesteckt und damit am Deckel 22 gehalten werden. Je nach Einsteckposition der Abdeckung 34 werden keine, mehrere oder alle Öffnungen 33 freigegeben.

Der Deckel 22 weist in seiner Mitte einen Griff 35 auf. Während der Deckel aus Metall oder Kunststoff hergestellt sein kann, sind der Griff 35 sowie die Abdeckung 34 vorzugsweise aus einem isolierenden Material gefertigt, um ein Halten oder Betätigen zu erleichtern. Bereiche 29 des Deckels 22 und der Aussenseite der Gefässwand 1 können für das Anbringen eines Logos oder Schriftzuges vorgesehen sein. Diese Logos können direkt bei der Herstellung der Gefässwand 1 in diese Bereiche ein- oder angebracht werden, zum Beispiel durch einformen. Die Bereiche 29 können auch eine spezielle Oberflächenbeschaffenheit aufweisen, welche ein nachträgliches Anbringen eines Logos oder ähnlich ermöglicht oder erleichtert.

In **Fig. 20** ist das Kochgefäss gemäss Fig. 17-19 in verstaubarer Form gezeigt. Dabei wurde die Gefässwand vom Gefässboden 2 getrennt und zusammengelegt im Gefässboden 2 verstaut. Der Deckel 22 ist direkt auf dem Gefässboden 2 aufgebracht und wird mittels dem O-Ring und den pilzförmigen Vorsprüngen 31 am Gefässboden gehalten. Anstelle des O-Rings, oder falls kein solcher vorgesehen ist, kann auch ein anderes Befestigungsmittel, beispielsweise eine Schnur verwendet werden.

Die Erfindung wurde anhand von beispielhaften Ausführungsformen dargestellt, die Erfindung ist jedoch nicht auf diese Ausführungsformen beschränkt Für eine Fachperson sind weitere Variationen und Modifikationen zur Ausgestaltung der Erfindung denkbar. Insbesondere sind weitere Materialien für die flexible Gefässwand und die übrigen Teile des Kochgefässes geeignet und weitere Arten und Ausgestaltungen von Verbindungen von Gefässboden und Gefässwand möglich. Auch kann eine Flexibilität einer Gefässwand beispielsweise durch das Herstellen der Gefässwand aus einzelnen, an sich nicht flexiblen Segmenten, erreicht werden. Eine solche Gefässwand wäre flexibel und zusammenlegbar, jedoch nicht oder höchstens teilweise, beispielsweise für die Verbindungen der Segmente, aus elastischem Material hergestellt.

## Patentansprüche

1. Mehrteiliges Kochgefäss aufweisend einen Gefässboden (2) und eine flexible Gefässwand (1), wobei der Gefässboden in einem oberen Randbereich eine Auflagefläche (8) aufweist für einen unteren Kantenbereich der Gefässwand (1), zum Bilden einer flüssigkeitsdichten, mindestens teilweise lösbaren Verbindung zwischen Gefässboden (2) und Gefässwand (1).

2. Kochgefäss nach Anspruch 1, mit einer Spannvorrichtung (4,44) zum Pressen der Gefässwand (1) an die in eine axiale Richtung des Kochgefässes verlaufende Auflagefläche (8) des Gefässbodens (2).

3. Kochgefäss nach Anspruch 1 oder 2, wobei die Auflagefläche (8) eine zumindest teilweise umlaufende Nut (12,15) aufweist, und wobei der untere Kantenbereich der Gefässwand (1) einen zur Nut (12,14) korrespondierenden zumindest teilweise umlaufenden Vorsprung (11,14) zum Bilden einer formschlüssigen Verbindung mit der Nut (12,15) aufweist.

4. Kochgefäss nach Anspruch 1 oder 2, wobei ein oberer Rand (26) des Gefässbodens (2) als ein nach aussen weisender Vorsprung (11) ausbildet ist, und im unteren Kantenbereich der Gefässwand (1) eine Nut (12) eingebracht ist, zum Bilden einer formschlüssigen Verbindung mit dem Vorsprung (11).

5. Kochgefäss nach Anspruch 3 oder 4, wobei die Spannvorrichtung (4,44) oberhalb oder unterhalb der Nut (12,15) oder des Vorsprungs (11,14) angebracht ist.

6. Kochgefäss nach einem der vorhergehenden Ansprüche, wobei die Verbindung in einem ersten Bereich mit einer ersten Grösse einer Zugkraft lösbar ist, und die Verbindung in einem zweiten Bereich mit einer zweiten Grösse einer Zugkraft lösbar ist, wobei die Grösse der ersten Zugkraft und die Grösse der zweiten Zugkraft unterschiedlich sind.

7. Kochgefäss nach einem der vorhergehenden Ansprüche, mit einem Greifelement (5,13,20) zum Heben des Kochgefässes und/oder zum Lösen der Verbindung zwischen Gefässboden (2) und Gefässwand (1).

8. Kochgefäss nach einem der vorhergehenden Ansprüche, wobei Gefässboden (2) und Gefässwand (2) aus einem feuerfesten Material sind.

9. Kochgefäss nach einem der vorhergehenden Ansprüche, mit einem Schutzelement (3,18,19), welches derart am Kochgefäss angeordnet ist, dass zumindest ein unterer Bereich der Gefässwand (1) vor Flammen einer Kochstelle geschützt ist.

10. Kochgefäss nach Anspruch 9, wobei das Schutzelement (3,18,19) nach unten vom Kochgefäss abstehend angeordnet ist derart, dass es einen Windschutz (18) für eine Kochstelle bildet.

11. Kochgefäss nach Anspruch 9 oder 10, wobei das Schutzelement (3,18,19) zumindest am unteren Bereich der Gefässwand (1) anliegt.

12. Kochgefäss nach einem der vorhergehenden Ansprüche, aufweisend einen Deckel (22), welcher mit dem Gefässboden (2) formschlüssig kombinierbar ist.

13. Kochgefäss nach einem der vorhergehenden Ansprüche, aufweisend einen Deckel (22) mit von der Oberseite des Deckels (22) abstehenden Zapfen (31).

14. Kochgefäss gemäss Anspruch 13, wobei die Gefässwand (1) Bänder (30) zum Befestigen der Bänder (30) an den Zapfen (31) des Deckels (22) aufweist.

15. Flexible Gefässwand (1) zur Verwendung in einem Kochgefäss gemäss einem der vorhergehenden Ansprüche, wobei die flexible Gefässwand (1) in einem unteren Kantenbereich eine zumindest teilweise umlaufende Nut (12,15) oder einen zumindest teilweise umlaufenden Vorsprung (11,14) aufweist, zum Bilden einer flüssigkeitsdichten Verbindung mit korrespondierenden Befestigungsmitteln (12,15; 11,14) in einem oberen Randbereich eines Gefässbodens (2).
